# EUROPEAN PATENT APPLICATION

(11) **EP 1 816 551 A2**
(43) Date of publication of application: **08.08.2007**
(21) Application number: 06126618.5
(22) Date of filing: 20.12.2006
(51) Int. Cl.: G06F 3/033

(54) **Apparatus and method for transmitting control commands in home network system**

(30) Priority: 06.01.2006 KR 20060001765
(71) Applicant: Samsung Electronics Co., Ltd., Suwon-si, Gyeonggi-Do (KR)
(72) Inventor: Yang, Sung Chul, Gyeonggi-do (KR)
(74) Representative: Grünecker, Kinkeldey, Stockmair & Schwanhäusser Anwaltssozietät

(57) **Abstract**

A control command transmission apparatus for controlling devices in a home network system environment is disclosed. A control command transmission apparatus includes a key input unit for inputting a user' s operation signal to control corresponding electronic devices connected to the home network system; a sensor for detecting the user's motion applied to the control command transmission apparatus to control the electronic devices; a location identification unit for identifying the location of the control command transmission apparatus of the home network system; a command generator for generating a command corresponding to the motion detected by the sensor; and an interface for communicating with a home server to which the electronic devices are connected, and for transmitting the command generated by the command generator to the home server. Accordingly, the present invention provides convenient use of electronic devices connected to a home network system.

## Description

### BACKGROUND OF THE INVENTION

### 1. Field of the Invention

The present invention relates to a home network system, and more particularly, to an apparatus and a method for transmitting control commands to electronic devices in a home network system.

### 2. Description of the Prior Art

At present, electronic devices such as personal computers, communication devices such as telephones, broadcast receivers such as televisions, audio and video devices such as digital video disc players and digital cameras, and various other devices such as electric home appliances, are used in home environments. Accordingly, home automation is commonly used for automatic control of these devices.

Initially, home automation was performed on an individual basis. In other words, the control of the home appliances by, for example, using telephones or infrared (IR) controllers, was on a one-to-one basis. Accordingly, a linking system between the home appliances was not provided.

However, as a result of recent development in communication technologies, a network has been introduced for the home appliances. A method for integrated control of this network generally functions by using a control unit. A 'home network system' typically refers to a system for integrally controlling home appliances via a network.

The home network system controls the home appliances, such as television, washing machines, microwave ovens, gas ranges, audio sets, air conditioners,boilers, lighting apparatus, gas valves, door locks, entry gates, etc., by connecting these (and other devices) to a control unit such as a home gateway or a home server and by using a terminal such as a remote controller.

If a user transmits a control signal to devices connected to the home network system by using the remote controller, the control unit controls the devices corresponding to the control signal. For this, the user selects a desired menu by operating various keys installed on the remote controller and transmits a desired signal.

Conventional methods of transmitting control commands have become more complicated and difficult as the number of devices connected to the home network system has increased. This problem is further amplified when synchronization between the devices is required, control procedures become more complicated. For example, when data used in an electronic device (hereafter referred to as a 'first electronic device') must be transmitted to another device (hereafter referred to as a 'second electronic device'), the user selects a device selection menu and selects the first and second electronic device therefrom by using the remote controller. After selecting the electronic devices in the device selection menu, the user must call a control command selection menu for the first electronic device. Subsequently, in the control command selection menu, the user selects a function of transmitting data stored in the first electronic device to the second electronic device, selects data to be transmitted, and finally selects a transmission command.

In order to control devices connected to a conventional home network system, an device selection menu and control command selection menu must be sequentially called on a controller screen, and a desired control command must be selected and transmitted.

Accordingly, in the conventional home network system, at least two menu selection operations must be performed to control the devices connected to the home network system.

Accordingly, the user is inconvenienced due to complicated methods for transmitting control commands in the conventional home network system. In some cases, the user may not know where a proper control command for a desired function is located, because several steps of selection from a menu must be performed to search individual control commands for the devices.

Therefore, there is a need for a system and a method to conveniently control home appliances using a home network system.

### SUMMARY OF THE INVENTION

Accordingly, it is an obj ect of the present invention is to provide a control command transmission apparatus of a home network system that is convenient for users and a method using the same.

Another object of the present invention is to provide a control command transmission apparatus of a home network system for generating operational control commands and a method using the same.

In order to achieve the above object, a control command transmission apparatus of a home network system according to the present invention includes a key input unit for inputting a user's operation signal to control electronic devices connected to the home network system; a sensor for detecting the user's motion to control the electronic devices; a location identification unit for identifying the location of the control command transmission apparatus of the home network system; a command generator for generating a command corresponding to the motion detected by the sensor; and an interface for communicating with a home server to which the electronic devices are connected, and for transmitting the command generated by the command generator to the home server.

The control command transmission apparatus may further include a control unit for transmitting location information identified by the location identification unit and motion information detected by the sensor to the home server, receiving information on an electronic device by which a control command is to be executed corresponding to the location and motion information, and providing the interface with the information on the electronic device by which the control command is to be executed.

The control command transmission apparatus may further include a location management database for storing location information on the electronic devices, an electronic device identification unit for identifying an electronic device by which the control command is to be executed by using the motion information detected by the sensor and the location information identified by the location identification unit, and a control unit for providing the interface with information on the electronic device identified by the electronic device identification unit.

The key input unit includes a motion identification key for identifying the user's motion.

The sensor preferably includes an acceleration sensor for detecting the speed of the motion and an optical geomagnetic sensor for detecting the direction of the motion.

The location management database stores absolute location information of the electronic device.

The location identification unit includes means for detecting signals from various sensors located in the building installed with the home network system, and optionally identifying the location of the control command transmission apparatus of the home network system according to the result of the detection. The location identification unit includes a radio frequency identification (RFID) tag and receives an identification result from a reader located in the building installed with the home network system, and identifies the location of the control command transmission apparatus of the home network system. The location identification unit includes a radio wave generator, and/or means for detecting the location of the control command transmission apparatus of the home network system by using radio waves continuously (or periodically or non-periodically) generated by the radio wave generator.

The electronic device identification unit preferably identifies the direction of the motion based on the location information identified by the location identification unit, and detects the corresponding information on the electronic device from the location management database after estimating the location information of the motion.

A method of transmitting a control command in a home network system according to the present invention includes selecting data through a control command transmission apparatus, identifying whether the control command transmission apparatus is in a motion identification mode, identifying the location of the control command transmission apparatus; identifying a motion applied to the control command transmission apparatus; identifying an electronic device by which a control command is to be executed according to the result of the motion identification, generating the control command according to the result of the motion identification, and transmitting the control command.

The step of identifying the electronic device includes identifying the direction of the motion based on the location information of the control command transmission apparatus identified in the step of identifying the location, and corresponding information on the electronic device is detected from a location management database after estimating the location information of the motion.

The step of transmitting the control command utilizes a communication method selected from the group consisting of: ZigBee, Bluetooth, wireless local area network (WLAN), and infrared communication (IrDA).

### BRIEF DESCRIPTION OF THE DRAWINGS

The above and other obj ects, features and advantages of the present invention will become more apparent from the following detailed description in conjunction with the accompanying drawings, in which:
FIG. 1 is a block diagram illustrating a control command transmission apparatus of a home network system according to the present invention;
FIG. 2 is a chart showing a database structure to manage locations of electronic devices in utilizing the control command transmission apparatus of the home network system according to the present invention; and
FIG.3 is a flow chart illustrating a method of transmitting a control command in the home network system according to the present invention.

### DETAILED DESCRIPTION OF THE PREFERRED EMBODIMENTS

Hereinafter, preferred embodiments of the present invention are described in detail with reference to the accompanying drawings. The same reference numbers are used for the same or like components in the accompanying drawings. Additionally, detailed explanations for well-known functions and compositions are omitted to avoid obscuring the present invention.

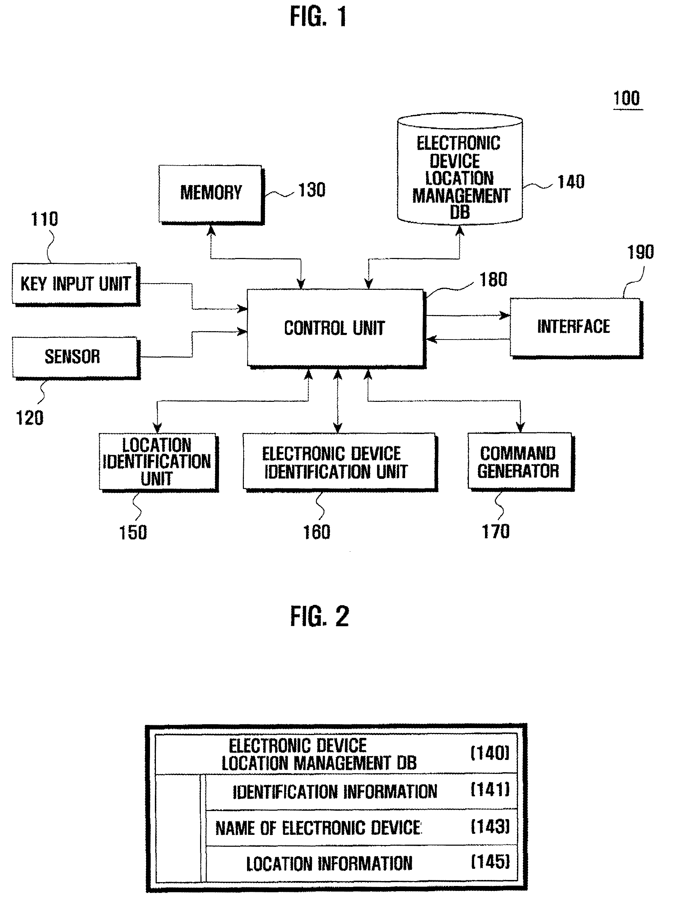

FIG. 1 is a schematic block diagram showing a control command transmission apparatus of a home network system according to the present invention. Referring to FIG. 1, the control command transmission apparatus 100 of the home network system according to the present invention includes a key input unit 110, sensor 120, memory 130, electronic device location management database (DB) 140, location identification unit 150, electronic device identification unit 160, command generator 170, control unit 180, and interface 190.

The key input unit 110 inputs a user's operation signal. For example, the key input unit 110 inputs the user's operation signal to control electronic device connected to the home network system. For this, the key input unit 110 preferably includes various keys or other input means (e.g., a touch-screen type input device). Especially, the key input unit 110 further includes a motion identification key which enables the control command transmission apparatus 100 to start identifying a user's motion relative to the control command of the apparatus 100 when the motion identification key is pressed. For example, the key input unit 110 further includes the motion identification key for identifying the user' s motion applied to the control command transmission apparatus 100 (for example, a user' s hand motion while holding the apparatus) as a command in a state that the motion identification key is pressed. The device according to the present invention may also include a touch sensitive display for inputting a user' s command. Additionally, means for processing input commands (e.g., such a scribble, etc.), may also be included.

The sensor 120 detects a user's motion. The sensor 120 collects data to identify the user's motion. In particular, the sensor 120 detects the user' s motion applied to the control command transmission apparatus 100 to control electronic devices connected to the home network system. The sensor 120 is preferably configured with an acceleration sensor and/or a geomagnetic sensor.

The acceleration sensor detects how fast a user has moved the control command transmission apparatus 100, and outputs the result. In the case that the acceleration sensor includes a 3-axis acceleration sensor (e. g. , an X, Y, and Z axis sensor), the direction and/or movement of the control command transmission apparatus 100 moving in a 3-dimensional space are detected, and the results are output. The acceleration sensor may also output information to identify how fast the control command transmission apparatus 100 has moved towards (or away from) a specific electronic device.

The geomagnetic sensor detects a moving direction of the control command transmission apparatus 100 and outputs the result. Namely, the geomagnetic sensor detects the moving direction of the control command transmission apparatus 100 based on the absolute compass direction, and outputs the result.

The memory 130 stores information related to the operation of the control command transmission apparatus 100 (for example, operating programs for system control, data related to the programs) . The memory 130 preferably stores a command corresponding to the motion detected by the sensor 120.

The electronic device location management database (DB) 140 stores location information, preferably absolute location information, on electronic devices connected to the home network system. To manage the location of the electronic device more precisely, the electronic device location management DB 140 preferably stores a floor plan of a building in which the home network system is installed, and the location of the electronic device on the floor plan.

The location identification unit 150 detects the location of the control command transmission apparatus 100. When the control command transmission apparatus 100 is operated by motion identification, the location identification unit 150 identifies absolute location information on the control command transmission apparatus 100 to identify the electronic device controlled corresponding to the direction of the motion. If a floor plan of a building is stored in the electronic device location management DB 140, the location identification unit 150 detects the location of the control command transmission apparatus 100 on the floor plan.

The location identification unit 150 utilizes a method for determining the location of one or more of the various devices using methods which can include a method of utilizing various sensors located at home, a method of detecting an RFID tag (that is associated with the location identification unit 150) with readers located at one or more locations in the home, and/or a method of utilizing radio waves continuously generated by the location identification unit 150.

The electronic device identification unit 160 identifies an electronic device by which a control command is to be executed corresponding to the location of the control command transmission apparatus 100 detected by the location identification unit 150 and the direction of the motion of the control command transmission apparatus 100 detected by the sensor 120. The electronic device identification unit 160 identifies the direction of a user's motion applied to the control command transmission apparatus 100 based on the location information of the control command transmission apparatus 100 detected by the location identification unit 150, and estimates location information corresponding to the motion. Subsequently, electronic device information is searched from the electronic device location management DB 140 using the location information.

The command generator 170 generates a command corresponding to the motion detected by the sensor 120. When the motion is directed towards an electronic device, a command is preferably generated to transmit data (for example, contents) stored in the control command transmission apparatus 100 to the electronic device identified by the electronic device identification unit 160. When the motion is directed away from the electronic device, a command is preferably generated to retrieve data (for example, an electronic photo) from the electronic device identified by the electronic device identification unit 160. In the case that commands corresponding to motions are stored in the memory 130, the command generator 170 preferably searches a corresponding command in the memory 130.

The control unit 180 controls the operation of the control command transmission apparatus 100 according to a user's operation signal input through the key input unit 110 or motion programs stored in the memory 130 . According to the user' s operation signal input through the key input unit 110, the control unit 180 preferably controls the interface 190 such that a control command is transmitted to an electronic device through a controller (for example, a home server and home gateway) to which various electronic devices are connected. Additionally, in response to pressing the motion identification key of the key input unit 110, the location identification unit 150, electronic device identification unit 160, and command generator 170 are preferably controlled by receiving information on the motion performed by the control command transmission apparatus 100 from the sensor 120.

The interface 190 performs communication with the home server and transmits control commands to electronic devices. The interface 190 receives status information on various electronic device connected to the home network system, and transmits it to the control unit 180. Additionally, the interface 190 may receive various content (for example, multimedia content such as, movies, music, photos, and/or documents) stored in the home server. For this, the interface 190 preferably utilizes various types of local area wireless communication method, such as ZigBee, Bluetooth, WLAN, infrared communication (IrDA), etc. The interface 190 may directly communicate with electronic devices connected to the home server.

Additionally, the control command transmission apparatus 100 further includes a display unit (not shown) to display various commands and content stored in the control command transmission apparatus 100, and the status of the motion of the control command transmission apparatus 100. The display unit also displays various content information transmitted by the home server. The display unit may include a Liquid Crystal Display (LCD) and/or a touch screen display.

The electronic device location management DB 140 and electronic device identification unit 160 may be installed in the home server. In this case, the control unit 180 transmits location information of the control command transmission apparatus 100 and the result of motion identification (for example, direction of a motion) to the home server through the interface 190. Additionally, according to the location information and the result of motion identification, information on an electronic device to be operated by a control command is preferably received from the home server through the interface 190.

FIG. 2 is a graph illustrating a database structure (i.e., electronic device location management DB 140) to manage locations of electronic devices in utilizing the control command transmission apparatus of the home network system according to the present invention. Referring to FIG. 2, the electronic device location management DB 140 includes an identification information field 141, electronic device name field 142, and location information field 145.

Preferably, the identification information field 141 stores information to identify electronic devices; the electronic device name field 142 stores names of the corresponding electronic devices (for example, television or washing machine); and the location information field 145 stores location information on the corresponding electronic devices. Especially, the location information field 145 preferably stores relative location information or absolute location information of the corresponding electronic devices on a floor plan of a building in which the electronic device is installed.

The electronic device location management DB 140 is preferably installed in the control command transmission apparatus 100 or in the home server.

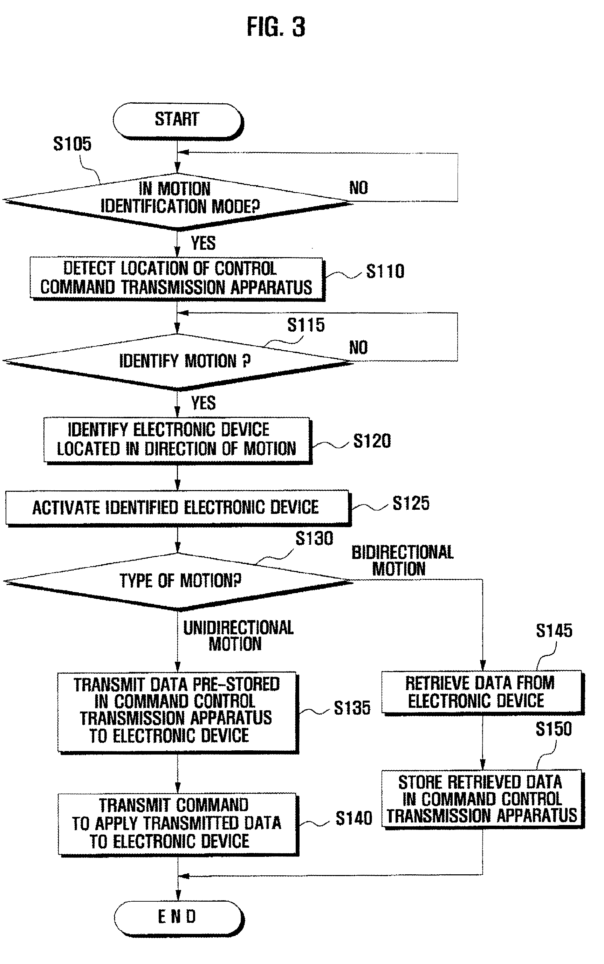

FIG.3 is a flow chart showing a control command transmission method of the home network system according to the present invention. Referring to FIGs. 1 and 3, a method of transmitting a control command according to the present invention is described as follows.

Firstly, in the state that data (various content) stored in a control command transmission apparatus 100 or home server is selected, if the control command transmission apparatus 100 is operated in a motion identification mode in step S105, namely, if a motion identification key included in a key input unit 110 is determined to have been selected, a control unit 180 identifies the mode, and identifies the location of the control command transmission apparatus 100 through a location identification unit 150 in step S110. The selection of the data is preferably performed by using a user interface installed in the control command transmission apparatus 100 or the home server. A display unit (not shown) is preferably installed in the control command transmission apparatus 100, in a home server, and/or in other free standing displays (e.g., home television, refrigerator display, a video phone, etc.), and a user may select desired data from a data list displayed on the display unit. Additionally, to identify the location of the control command transmission apparatus 100, the control command transmission apparatus 100 may utilize a method such as a method of utilizing various sensors located at home, a method of installing an RFID tag in the location identification unit 150 and detecting the RFID tag with readers located at several locations in the home, or a method of utilizing radio waves continuously generated by the location identification unit 150.

Subsequently, if a motion applied to the control command transmission apparatus 100 isdetected by a sensor 120 in step S115, an electronic device located in the direction of the motion is identified by an electronic device identification unit 160 in step S120, and the electronic device is activated in step S125. For this, the control unit 180 preferably receives information on the electronic device to be operated from the electronic device identification unit 160, generates a command for activating the electronic device by controlling a command generator 170, and transmits the command to the home server through an interface 190.

In step S120, the location of the control command transmission apparatus 100 on a floor plan of the home network system and the direction of the motion directed to an electronic device are preferably identified based on the location information of the control command transmission apparatus 100 detected in step S110 and the direction of the motion detected in step S115. In the case that the electronic device location management DB 140 and the electronic device identification unit 160 are installed in the home server, step S120 is preferably performed by the home server.

In step S115, the movement of the control command transmission apparatus 100 is detected by an output value of an acceleration sensor included in the sensor 120, and the direction of the control command transmission apparatus 100 is detected by an output value of a geomagnetic sensor. In the case that the acceleration sensor is a 3-axis acceleration sensor, the direction of the motion of the control command transmission apparatus 100 is preferably detected in 3-dimensions. Additionally, to reduce errors in the detection of the motion, the motion is preferably identified only when displacement of the motion is larger than a predetermined value.

In step 130, the control unit 180 identifies the type of the motion transmitted by the sensor 120. If the type of motion is a unidirectional motion in step 135, the control unit 180 transmits data (for example, content information) pre-stored in the control command transmission apparatus 100 or the home server to the electronic device identified in step S120, and transmits a command to apply the transmitted data to the electronic device in step S140. For example, if the identified electronic device is a television and a moving picture is stored in the control command transmission apparatus 100, then the control command transmission apparatus 100 transmits the moving picture to the television in step S135, and transmits a command for playing the moving picture in the television in step S140. For this, a step of selecting content (for example, a movie) pre-stored in the control command transmission apparatus 100 is preferably performed prior to the above steps.

As an example of a unidirectional motion in the control command transmission apparatus 100, a user may move the control command transmission apparatus 100 towards an electronic device in the state that a motion identification key of the key input unit 110 is pressed.

If, in step 130, the type of motion is a bidirectional motion in step S145, the control command transmission apparatus 100 retrieves data from the electronic device identified in step S120 through the home server, and stores the data in the control command transmission apparatus 100 in step S150 . For example, if the identified electronic device is an electronic picture frame and the electronic picture frame is currently displaying a picture, the control command transmission apparatus 100 retrieves the picture file from the home server in step S145, and stores the picture file internally in step S150. The control command transmission apparatus 100 retrieves the picture file from the home server because data file of the picture is stored in the home server while the picture file is displayed on the electronic picture frame.

As an example of a bidirectional motion in the control command transmission apparatus 100, a user may move the control command transmission apparatus 100 away from the electronic device in the state that a motion identification key of the key input unit 110 is pressed.

As described above, a method of transmitting a control command in a home network system according to the present invention provides easy transmission of control commands to electronic devices connected to a home network system by identifying a motion of a control command transmission apparatus of the home network (for example, a remote controller) and transmitting a corresponding command. Accordingly, users may more conveniently use the electronic devices connected to the home server.

Although example embodiments of the present invention have been described in detail hereinabove, it should be understood that many variations and/or modifications of the basic inventive concept herein described, which may appear to those skilled in the art, will still fall within the spirit and scope of the example embodiments of the present invention as defined in the appended claims.

## Claims

1. A control command transmission apparatus of a home network system comprising:
a key input unit for inputting a user's operation signal to control electronic devices connected to the home network system;
a sensor for detecting the user' s motion to control the electronic devices;
a location identification unit for identifying the location of the control command transmission apparatus;
a command generator for generating a command corresponding to the motion detected by the sensor; and
an interface for communicating with a home server to which the electronic devices are connected, and for transmitting the command generated by the command generator to the home server.

2. The control command transmission apparatus of claim 1, further comprising a control unit for transmitting location information identified by the location identification unit and motion information corresponding to the user's motion generated by the sensor to the home server, receiving information on an electronic device by which a control command is to be executed corresponding to the location and motion information, and providing the interface with the information on the electronic device by which the control command is to be executed.

3. The control command transmission apparatus of claim 1, further comprising:
a location management database for storing location information corresponding to the electronic devices;
an electronic device identification unit for identifying an electronic device by which a control command is to be executed by using the motion information detected by the sensor and the location information identified by the location identification unit; and
a control unit for providing the interface with information on the electronic device identified by the electronic device identification unit.

4. The control command transmission apparatus of claim 1, wherein the key input unit includes a motion identification key for identifying the user's motion.

5. The control command transmission apparatus of claim 1, wherein the sensor includes at least one of an acceleration sensor for detecting the motion and a geomagnetic sensor for detecting the direction of the motion.

6. The control command transmission apparatus of claim 5, wherein the acceleration sensor includes a 3-axis acceleration sensor for detecting at least one of the direction and the motion in a 3-dimensional space.

7. The control command transmission apparatus of claim 3, wherein the location management database stores absolute location information of the electronic device.

8. The control command transmission apparatus of claim 1, wherein the location management database stores a floor plan of a building that includes the home network system and location information of electronic devices on the floor plan.

9. The control command transmission apparatus of claim 3, wherein the location identification unit:
detects signals from a plurality of sensors located in a building that includes the home network system, and
identifies the location of the control command transmission apparatus of the home network system according to the result of the detection.

10. The control command transmission apparatus of claim 1, wherein the location identification unit includes a radio frequency identification(RFID) tag and receives an identification result from a reader located in a building which includes the home network system, and identifies the location of the control command transmission apparatus of the home network system.

11. The control command transmission apparatus of claim 1, wherein the location identification unit includes a radio wave generator, and detects the location of the control command transmission apparatus of the home network system by using radio waves continuously generated by the radio wave generator.

12. The control command transmission apparatus of claim 3, wherein the electronic device identification unit identifies the direction of the motion based on the location information identified by the location identification unit, and detects the corresponding information on the electronic device from the location management database after estimating the location information of corresponding to the motion.

13. The control command transmission apparatus of claim 3, wherein the command generator generates a command for transmitting internally stored data to an electronic device identified by the electronic device identification unit when the motion is directed towards the electronic device.

14. The control command transmission apparatus of claim 3, wherein the command generator generates a command for retrieving data from an electronic device identified by the electronic device identificationunitwhen the motion is directed away from the electronic device.

15. The control command transmission apparatus of claim 1, further comprising a memory for storing control commands corresponding to the motion detected by the sensor, wherein the command generator detects control commands from the memory corresponding to the motion.

16. The control command transmission apparatus of claim 1, wherein the interface utilizes a communication method including at least one of ZigBee, Bluetooth, wireless local area network (WLAN), and infrared communication (IrDA) communication methods.

17. The control command transmission apparatus of claim 1, further comprising a display unit for displaying various commands and content stored in the control command transmission apparatus of the home network system, and the status of the motion of the control command transmission apparatus.

18. A method of transmitting a control command in a home network system, comprising the steps of:
selecting data through a control command transmission apparatus;
determining whether the control command transmission apparatus is in a motion identification mode;
determining the location of the control command transmission apparatus;
identifying amotion applied to the control command transmission apparatus;
identifying an electronic device by which a control command is to be executed according to the result of the motion determining; generating the control command according to the result of the motion identification; and
transmitting the control command.

19. The method of claim 18, wherein, in the step of determining whether the control command transmission apparatus is in a motion identification mode, an operation of a motion identification key installed in the control command transmission apparatus is detected.

20. The method of claim 18, wherein, in the step of identifying the location of the control command transmission apparatus, values of a plurality of sensors located in a building which includes the home network system are detected, and the location of the control command transmission apparatus is identified according to the result of the value determination.

21. The method of claim 18, wherein, in the step of identifying the location of the control command transmission apparatus, a result of identifying a Radio Frequency Identification (RFID) tag included with the control command transmission apparatus is transmitted from an RFID reader included in the building installed with the home network system, and the location of the control command transmission apparatus is identified accordingly.

22. The method of claim 18, wherein, in the step of identifying the location of the control command transmission apparatus, the location of the control command transmission apparatus is identified by radio waves continuously generated by a radio wave generator installed in the control command transmission apparatus.

23. The method of claim 18, wherein, in the step of identifying a motion applied to the control command transmission apparatus, the direction and type of the motion are detected.

24. The method of claim 18, wherein, in the step of identifying the electronic device, the direction of the motion is identified based on the location information of the control command transmission apparatus identified in the location identification step and the corresponding information on the electronic device is detected from a location management database after estimating the location information of the motion.

25. The method of claim 18, wherein, in the step of generating the control command, a command for transmitting internally stored data to an electronic device identified by the electronic device identification unit is generated when the motion is directed towards the electronic device.

26. The method of claim 18, wherein the step of transmitting the control command utilizes a communication method including at least one of a ZigBee, Bluetooth, wireless local area network (WLAN), and infrared communication (IrDA) communication methods.
